# EUROPÄISCHE PATENTANMELDUNG

(11) **EP 1 271 349 A1**
(43) Veröffentlichungstag der Anmeldung: **02.01.2003**
(21) Anmeldenummer: 01115830.0
(22) Anmeldetag: 28.06.2001
(51) Int. Cl.: G06F 17/30

(54) **Verfahren zur Zusammenführung verteilter Datenbanken**

(71) Anmelder: SIEMENS AKTIENGESELLSCHAFT, 80333 München (DE)
(72) Erfinder: Engelsmann, Karel, Dr., 81369 München (DE); Schneider, Alfred, 85540 Haar (DE); Schmid, Hermine, 81375 München (DE); Treichel, Manfred, 82110 Germering (DE)

(57) **Zusammenfassung**

Beim Generationswechsel von Vermittlungsstellen werden kleinere ältere, bislang anhand eigener Datenbanken (DB_{V2}) selbständig arbeitende Vermittlungsstellen (V2) durch abgesetzte Vermittlungseinheiten RSU (Remote Switching Unit) ersetzt. Diese sind keine selbständig arbeitenden Vermittlungsstellen und werden zentralen Host-Vermittlungsstellen (V) zugeordnet und durch diese gesteuert. Dort müssen Datenbanken (DB_{V,neu}) vorhanden sein, deren Funktionalität die der Datenbanken (DB_{V1}, DB_{V2}) der bisher separaten Vermittlungsstellen (V1, V2) umfasst. Erfindungsgemäß werden die Datenbanken (DB_{V1}, DB_{V2}) aus den Vermittlungsstellen (V1, V2) zunächst extrahiert, außerhalb der Vermittlungsstellen zusammengeführt und nachträglich um etwaige Änderungen der Ursprungs-Datenbanken (DB_{V1}, DB_{V2}) ergänzt. Dieses Verfahren läuft automatisch und lässt die Einbeziehung von z.B. Planungsdaten zu. Vorteilhaft ist, dass der Betrieb während des Zusammenführens der Datenbanken (DB_{V1}, DB_{V2}) weitgehend ungestört bleibt und nur lesend auf die alten Datenbanken (DB_{V1}, DB_{V2}) zugegriffen wird. Mehrere Datenbanken können durch wiederholtes Anwenden des erfindungsgemäßen Verfahrens zusammengeführt werden. Das erfindungsgemäße Verfahren ist auch in anderen Datenverarbeitungssystemen, insbesondere Echtzeitsystemen, anwendbar.

## Beschreibung

Beim Generationswechsel von Vermittlungsstellen werden kleinere ältere, bislang anhand eigener Datenbanken selbständig arbeitende Vermittlungsstellen durch abgesetzte Vermittlungseinheiten RSU (Remote Switching Unit) ersetzt. Diese abgesetzten Vermittlungseinheiten RSU sind keine selbständig arbeitenden Vermittlungsstellen. Daher werden diese Vermittlungseinheiten RSU zentralen Host-Vermittlungsstellen zugeordnet und durch diese gesteuert. In der zentralen Host-Vermittlungsstelle müssen dementsprechend Datenbanken vorhanden sein, deren Funktionalität die der Datenbanken der bisher separaten Vermittlungsstellen umfasst.

Ein Problem im Zusammenhang mit diesem Generationswechsel besteht darin, die Datenbanken der Vermittlungsstellen zu einer neuen Datenbank der Host-Vermittlungsstelle zu verschmelzen. Dies soll weitgehend ohne Störungen des laufenden Betriebs erfolgen. Konflikte aufgrund identischer Namen in den alten Datenbanken müssen gelöst werden. Wegen der Größe der Datenbanken ist damit zu rechnen, dass während des vorzugsweise außerhalb der Vermittlungssysteme stattfindenden Zusammenführens der Datenbanken Änderungen an den weiterhin in den Vermittlungsstellen verwendeten alten Datenbanken vorgenommen werden. Diese Änderungen sollen in die neue Datenbank ebenfalls übernommen werden.

Dieses Problem tritt nicht nur beim Zusammenführen von Datenbanken von Vermittlungsstellen auf, sondern auch beim Zusammenführen von Datenbanken beliebiger Echtzeitsysteme. Ein Verfahren, mit dem Datenbanken von Echtzeitsystemen zusammengeführt werden können, ist auch in anderen - Nicht-Echtzeit - Datenverarbeitungssystemen anwendbar.

Die der vorliegenden Erfindung zugrundeliegende Aufgabe besteht darin, ein Verfahren zur Zusammenführung verteilter Datenbanken anzugeben, welches insbesondere die genannten Probleme löst.

Diese Aufgabe wird durch die Merkmale des Patentanspruchs 1 gelöst.

Ein wesentlicher Vorteil des erfindungsgemäßen Verfahrens besteht darin, dass das Zusammenführen von verteilten Datenbanken automatisch außerhalb des Datenverarbeitungssystems abläuft, während der normale Betrieb des Datenverarbeitungssystems fortgesetzt wird. Änderungen an den alten Datenbanken können während der Ablaufzeit der Zusammenführung weiterhin vorgenommen werden und werden in die neue Datenbank anhand einer während der Änderungen erstellten Aufzeichnungsdatei eingebracht. Dieser dritte Schritt des Verfahrens setzt voraus, dass die Datenbanken des Datenverarbeitungssystems während dieses Schrittes für Änderungen gesperrt werden. Der dritte Schritt läuft jedoch aufgrund der vergleichsweise geringen zu verarbeitenden Datenmenge ohne große Zeitverzögerungen ab. Das Datenverarbeitungssystem kann in dieser Zeit weiterhin auf Basis der - jetzt eingefrorenen - alten Datenbanken betrieben werden.

Besonders vorteilhaft ist dabei einerseits, dass der Betrieb des Datenverarbeitungssystems während des Zusammenführens der Datenbanken weitgehend ungestört bleibt. Andererseits wird auf die alten Datenbanken des weiterhin arbeitenden Datenverarbeitungssystems während des Zusammenführens der Datenbanken - zweiter Schritt des erfindungsgemäßen Verfahrens - nur lesend zugegriffen, so dass der reguläre Betrieb mit den alten Datenbanken ohne Einschränkungen fortgesetzt werden kann, falls das Zusammenführen der Datenbanken fehlschlägt.

Ein weiterer wichtiger Vorteil besteht darin, dass mehrere Datenbanken durch wiederholtes Anwenden des erfindungsgemäßen Verfahrens zusammengeführt werden können.

Gemäß einer vorteilhaften Ausgestaltung des erfindungsgemäßen Verfahrens kann zunächst ein Probelauf der automatischen Zusammenführung durchgeführt werden. Die bei diesem Probelauf automatisch bei Namenskonflikten vergebenen Bezeichner können eingesehen und verändert werden. Die entstehende Zuordnungsliste wird dann in die tatsächliche Zusammenführung einbezogen.

Weitere vorteilhafte Ausgestaltungen der Erfindung sind den Unteransprüchen zu entnehmen.

Im folgenden wird das erfindungsgemäße Verfahren anhand von 4 Zeichnungen näher erläutert. Dabei zeigen:
- Figur 1: eine schematische Darstellung des Ablaufs des erfindungsgemäßen Verfahrens,
- Figur 2: eine schematische Darstellung der möglichen Vorgänge beim Verschmelzen mehrerer Datenbanken DB_{V1}, DB_{V2} zu einer neuen Datenbank DB_{V,neu},
- Figur 3: eine schematische Darstellung einer Netzwerkkonfiguration mit zwei Vermittlungsstellen V1 und V2 und
- Figur 4: eine schematische Darstellung einer Netzwerkkonfiguration mit abgesetzter Vermittlungseinheit RSU und Host-Vermittlungsstelle V.

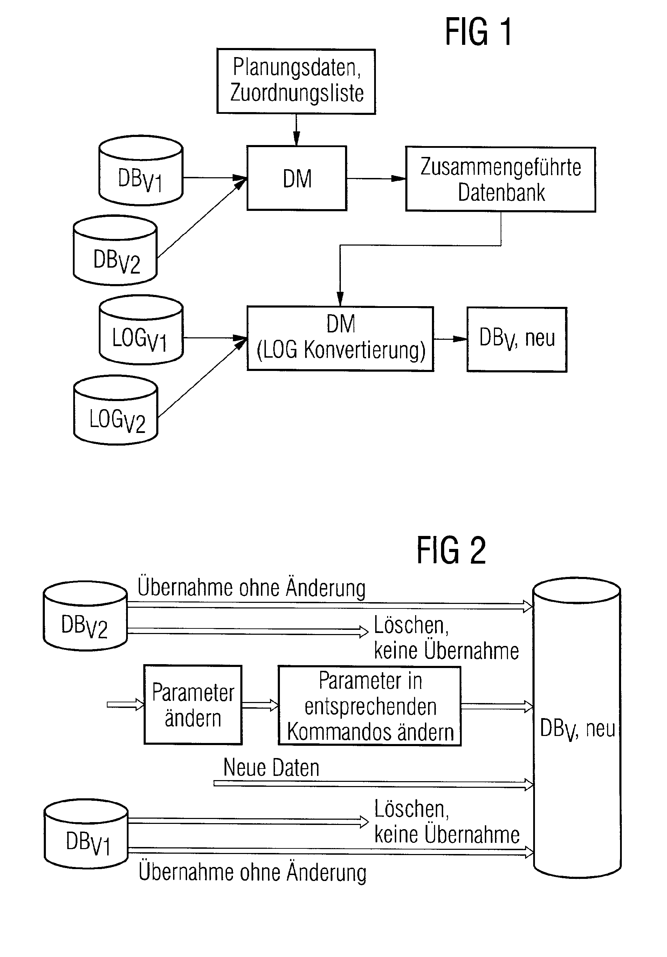

Die Zusammenführung - Migration - zweier Datenbanken DB_{V1}, DB_{V2} erfolgt mit Hilfe eines vorhandenen Datenextraktionstools, das die Daten aus den Datenbanken DB_{V1}, DB_{V2} in Form sogenannter Kommandodateien extrahiert, und eines erfindungsgemäßen Datenmigrations- und Upgradetools DM, das aus den Kommandodateien der Vermittlungsstellen V1, V2 einen einheitlichen neuen Satz von Kommandos erzeugt. Figur 1 stellt diesen Vorgang schematisch dar.

In dem resultierenden Satz von Kommandos sind alle relevanten Daten der Vermittlungsstellen V1, V2 enthalten. Bei Namenskonflikten wird eine Liste mit Lösungsvorschlägen erzeugt und zusammen mit der Ergebnisliste eines Planungstools bei der Zusammenführung der Datenbanken DB_{V1}, DB_{V2} mittels des erfindungsgemäßen Datenmigrations- und Upgrade-Tools DM berücksichtigt.

Beim Zusammenführen der Kommandodateien werden die extrahierten Daten unterschiedlich behandelt - Figur 2:
- Nicht mehr gültige Daten der Vermittlungsstellen V1, V2 werden gelöscht.
- Weiterhin gültige Daten der Vermittlungsstellen V1, V2 werden ohne Änderungen in die zusammengeführte Datenbank DB_{V,neu} eingearbeitet.
- Um eine einheitliche Adressierung und Nummerierung in der zusammengeführten Datenbank DB_{V,neu} zu erreichen, werden die Daten der Vermittlungsstellen V1, V2 nach bestimmten Regeln dann abgeändert, wenn gleiche Namen oder Bezeichnungen in beiden Datenbanken DB_{V1}, DB_{V2} vorkommen. Beispielsweise bleibt der gleiche Name BERLIN in der Datenbank DB_{V1} der Vermittlungsstelle V1 unverändert und wird aus der Datenbank DB_{V2} der Vermittlungsstelle V2 als BERLIN%1 in die neue Datenbank DB_{V,neu} eingefügt. Die Änderungen müssen in allen Kommandos vorgenommen werden, welche die geänderten Namen oder Bezeichnungen als Parameter enthalten.
- Einige Kommandos werden durch das erfindungsgemäßen Datenmigrations- und Upgrade-Tool DM neu erstellt.
- Die meisten Kommandos werden ohne Änderung in die zusammengeführte Datenbank eingearbeitet.
- Anhand von Planungsdaten wird die entstehende neue Datenbank DB_{V,neu} ggf. bedarfsgerecht abgeändert.

Nach dem Zusammenführen der ursprünglichen Kommandodateien zu einer neuen Kommandodatei werden etwaige zwischenzeitlich erfolgte Änderungen der Datenbanken DB_{V1}, DB_{V2} der Vermittlungsstellen V1, V2 - in sogenannten LOG-Dateien LOG_{V1}, LOG_{V2} automatisch protokolliert - nach einer entsprechenden Konvertierung der LOG-Dateien durch das Datenmigrations- und Upgrade-Tool DM mit der neuen Kommandodatei verschmolzen, und es entsteht die neue Datenbank DB_{V,neu} der Host-Vermittlungsstelle V.

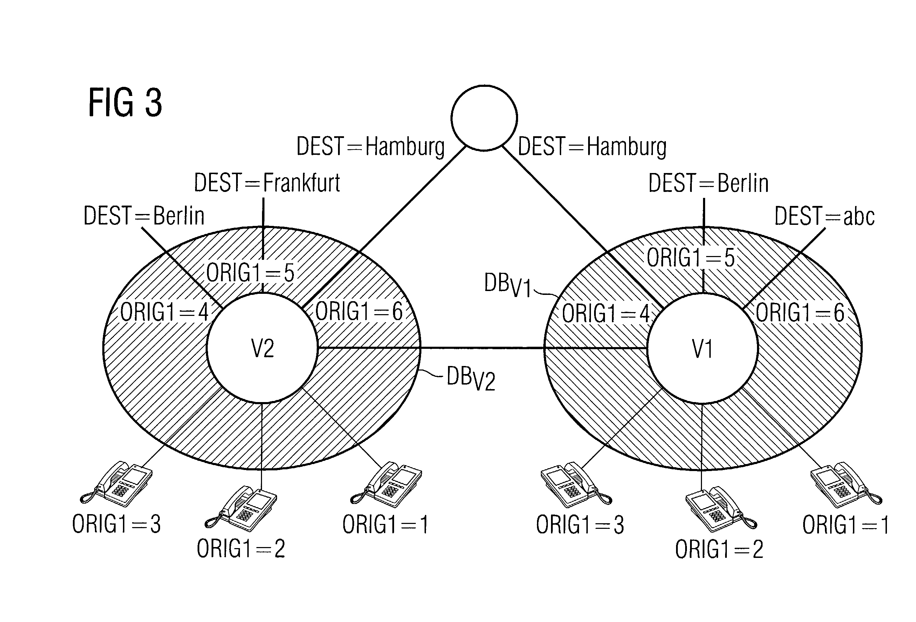

In einem Anwendungsbeispiel wird die Lösung eines beim Zusammenführen der Datenbanken DB_{V1}, DB_{V2} zweier Vermittlungsstellen V1, V2 auftretenden Problems verdeutlicht. Sowohl in der Datenbank DB_{V1} der Vermittlungsstelle V1 als auch in der Datenbank DB_{V2} der Vermittlungsstelle V2 werden für die Teilnehmer die gleichen Ursprungskennungl-Werte (ORIG1) für verschiedene Leitwege verwendet - Figur 3. Die Zusammenführung beider Datenbanken DB_{V1}, DB_{V2} kann dann zu folgendem Adressierungsproblem für abgehende Wege führen: für die Teilnehmer der Vermittlungsstelle V1 ist für den gleichen Kennzahlpunkt (Codepoint) 040 (DEST=Hamburg) ein anderer Weg vorgesehen als für die Teilnehmer in der Vermittlungsstelle V2. Solche Namenskonflikte werden beim Zusammenführen der Datenbanken DB_{V1}, DB_{V2} automatisch entdeckt und durch Umbenennung nach bestimmten Regeln beseitigt. In diesem Beispiel werden die Namen der Datenbank DB_{V1} der Vermittlungsstelle V1 ohne Änderung und die Namen der Datenbank DB_{V2} der Vermittlungsstelle V2 geändert in die zusammengeführte Datenbank DB_{V,neu} übernommen.

Die Änderung der Routing-Daten wird in folgenden Schritten vorgenommen:
- Die ORIG1-Werte werden neu geplant und zugeordnet.
- Die Namenskonflikte werden bereinigt.
- Codepoint-Datenbanken werden in Abhängigkeit der ORIG1-Werte eingerichtet, auch für Codes, die vorher ohne ORIG1 eingerichtet waren. Codepoints sind je nach Ursprung - Vermittlungsstelle V1 oder Vermittlungsstelle V2 - zu unterscheiden.
- Die zusammengeführte Datenbank DB_{V,neu} wird optimiert, z.B. werden Codepoints mit gleichem Code und unterschiedlichen ORIG1-Werten zum gleichen Ziel DEST zusammengeführt.

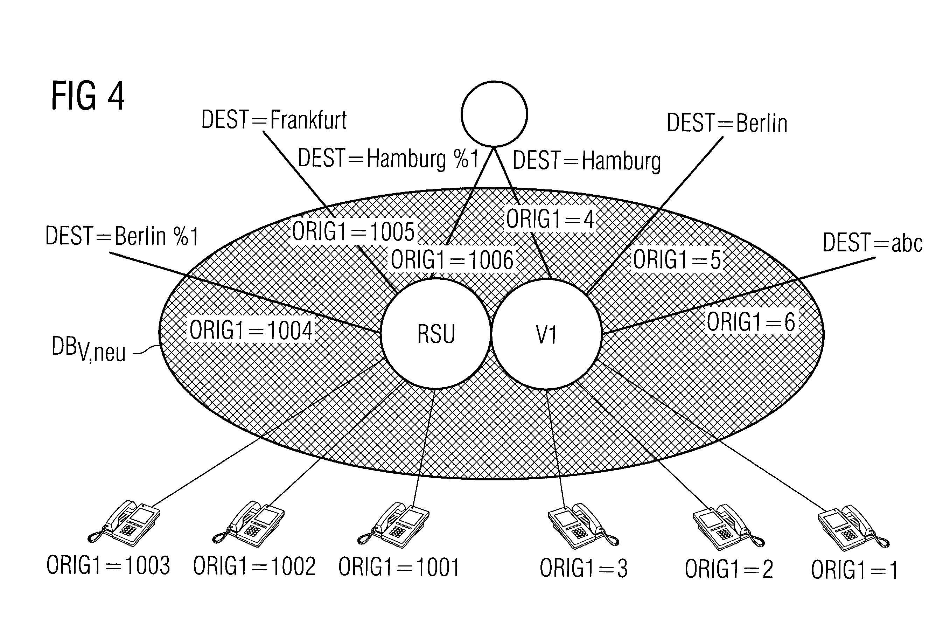

Das Ergebnis der Zusammenführung der Datenbanken DB_{V1}, DB_{V2} der Vermittlungsstellen V1, V2 ist eine einheitliche Datenbank DB_{V,neu} für eine Host-Vermittlungsstelle V mit abgesetzter Vermittlungseinheit RSU - Figur 4.

## Patentansprüche

1. Verfahren zur Zusammenführung verteilter Datenbanken, das bei auf mehrere Komponenten (V1, V2) eines Datenverarbeitungssystems aufgeteilten Datenbanken (DB_{V1}, DB_{V2}) angewendet wird,
- demgemäss in einem ersten Schritt die Datenbanken (DB_{V1}, DB_{V2}) der Komponenten (V1, V2) extrahiert werden,
- demgemäss in einem zweiten Schritt die extrahierten Datenbanken (DB_{V1}, DB_{V2}) außerhalb des Datenverarbeitungssystems in einer neuen Datenbank (DB_{V,neu}) zusammengeführt werden, indem
- nicht mehr gültige Daten der Datenbanken (DB_{V1}, DB_{V2}) gelöscht werden,
- weiterhin gültige Daten der Datenbanken (DB_{V1}, DB_{V2}) ohne Änderungen eingearbeitet werden,
- demgemäss in einem dritten Schritt die neue Datenbank (DB_{V,neu}) um die während der Bearbeitungszeit des zweiten Schrittes erfolgten Änderungen der Datenbanken (LOG_{V1}, LOG_{V2}) der Komponenten (V1, V2) ergänzt wird.

2. Verfahren nach Anspruch 1,
**dadurch gekennzeichnet,**
**dass** während des zweiten Schrittes zusätzlich Namenskonflikte gelöst werden, die aus bisher identischen Bezeichnungen in den Datenbanken (DB_{V1}, DB_{V2}) der Komponenten (V1, V2) resultieren.

3. Verfahren nach einem der Ansprüche 1 oder 2,
**dadurch gekennzeichnet,**
**dass** im zweiten Schritt zusätzlich während einer Planungsphase erstellte Planungsdaten in die entstehende neue Datenbank (DB_{V,neu}) eingearbeitet werden.

4. Verfahren nach einem der Ansprüche 1 bis 3,
**dadurch gekennzeichnet,**
- **dass** zunächst nur der erste und der zweite Schritt ausgeführt werden,
- **dass** anhand der neuen Datenbank (DB_{V,neu}) die bei der automatischen Bereinigung der Namenskonflikte entstandenen Namen verändert werden und dabei aus der Zuordnung der automatisch vergebenen Namen zu den geänderten Namen eine Zuordnungsliste erstellt wird,
- **dass** das Zusammenführen der Datenbanken (DB_{V1}, DB_{V2}) wie beschrieben unter Einbeziehung der Zuordnungsliste durchgeführt wird.

5. Verfahren nach einem der Ansprüche 1 bis 4,
**dadurch gekennzeichnet,**
**dass** das Ergebnis der Zusammenführung mehrere verteilte Datenbanken (DB_{V,neu}) sind.

6. Verfahren nach einem der Ansprüche 1 bis 5,
**dadurch gekennzeichnet,**
**dass** die Komponenten (V1, V2) Vermittlungsstellen sind.
